(19) Europäisches Patentamt
European Patent Office
Office européen des brevets

(11) Veröffentlichungsnummer: **0 612 755 A1**

# (12) EUROPÄISCHE PATENTANMELDUNG

(21) Anmeldenummer: **94102630.4**

(22) Anmeldetag: **22.02.94**

(51) Int. Cl.5: **C07F 7/12**, C07F 7/18, G02F 1/133

(30) Priorität: **26.02.93 DE 4305970**

(43) Veröffentlichungstag der Anmeldung:
**31.08.94 Patentblatt 94/35**

(84) Benannte Vertragsstaaten:
**DE FR GB**

(71) Anmelder: **HOECHST AKTIENGESELLSCHAFT**
**Brüningstrasse 64**
**D-65929 Frankfurt (DE)**

(72) Erfinder: **Rösch, Norbert, Dr.**
**Geisenheimer Strasse 95**
**D-60529 Frankfurt (DE)**
Erfinder: **Wegener, Peter, Dr.**
**Am Eichkopf 4**
**D-61462 Königstein (DE)**

## (54) Cyclische Strukfurelemente enthaltende Silan-Koppler als Orientierungsfilme.

(57) Orientierungsfilm für Flüssigkristalle, bestehend aus einer quasi monomolekularen Schicht von Verbindungen der Formel II,

$C_y - S_p - A_n$ (II)

worin $C_y$ und $S_p$ die in der Formel I angegebenen Bedeutungen haben und

- $C_y$ einen medio- oder makrocyclischen Kohlenstoffring mit 8 oder mehr Ringgliedern, wobei dieser Ring auch anellierte Benzolringe und -O-, -N-, -S-, -Si- und -B- als Heteroatome enthalten kann;
- $S_p$ eine Alkylgruppe mit 1 bis 20 Kohlenstoffatomen, bei der eine oder mehrere nicht benachbarte $CH_2$-Gruppen durch -O-, -S-,-CO-, -O-CO-, -NH-CO-, -O-COO-, -NH-CO-NH-, -NH-CO-O-, $-SO_2-$, $-Si(CH_3)_2-$, -CH = CH- oder -C≡C- ersetzt sein können;
- $A_n$ Si $X^1X^2X^3$, wobei
- $X^1$ eine Einfachbindung und
- $X^2$, $X^3$ unabhängig voneinander eine Einfachbindung, eine Alkyl oder eine Alkoxygruppe

ist, wobei die Verbindungen der Formel (II) über die Einfachbindung(en) der Gruppe $A_n$ an eine oxidische Schicht gebunden sind.

Die erfindungsgemäßen Orientierungsfilme eignen sich in hervorragender Weise zur Orientierung von Flüssigkristallen, insbesondere ferroelektrischen. Durch die geringe Dicke des Orientierungsfilms werden dielektrische Verluste im Display vermieden. Das Auftreten von Geisterbildern wird weitgehend unterdrückt.

EP 0 612 755 A1

Schalt- und Anzeigevorrichtungen, die ferroelektrische Flüssigkristall-Mischungen enthalten (FLC-Displays), sind beispielsweise aus EP-B 0 032 362 (= US-A 4 367 924) bekannt. Flüssigkristalldisplays sind Vorrichtungen, die z.B. aufgrund elektrischer Beschaltung ihre optischen Transmissionseigenschaften derart ändern, daß durchfallendes (und gegebenenfalls wieder reflektiertes) Licht intensitätsmoduliert wird. Beispiele sind die bekannten Uhren- und Taschenrechneranzeigen oder Flüssigkristalldisplays im OA- (office automation) oder TV (television) Bereich (siehe auch Liquid Crystal Device Handbook, Nikkan Kogyo Shimbun, Tokyo, 1989; ISBN 4-526-02590-9C 3054 und darin zitierte Arbeiten).

Diese FLC-Displays sind so aufgebaut, daß eine Flüssigkristallschicht beiderseitig von Schichten eingeschlossen ist, die üblicherweise, in dieser Reihenfolge ausgehend von der FLC-Schicht, mindestens eine Orientierungsschicht, Elektroden und eine Begrenzungsscheibe (z.B. aus Glas) sind. Außerdem enthalten sie einen Polarisator, sofern sie im "guest-host"- oder im reflexiven Modus betrieben werden, oder zwei Polarisatoren, wenn als Modus die transmissive Doppelbrechung ("birefringence mode") genutzt wird. Die Schalt- und Anzeigeelemente können gegebenenfalls weitere Hilfsschichten, wie Diffusionssperr- oder Isolationsschichten enthalten.

Die Orientierungsschichten, die aus einem organischen (z.B. Polyimid, Polyamid und Polyvinylalkohol) oder anorganischen (z.B. SiO) Material bestehen, bringen, gemeinsam mit einem hinreichend klein gewählten Abstand der Begrenzungsscheiben, die FLC-Moleküle der Mischung in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle bekanntlich zwei gleichwertige Orientierungen, zwischen denen sie durch pulsartiges Anlegen eines elektrischen Feldes geschaltet werden können, d.h., FLC-Displays sind bistabil schaltbar. Die Schaltzeiten sind umgekehrt proportional zur spontanen Polarisation der FLC-Mischung und liegen im Bereich von Mikrosekunden.

Außer den oben genannten Orientierungsschichten, aufgebaut aus organischen Polymeren, können Orientierungsschichten auch aus amphiphilen Substanzen bestehen, die nach der Langmuir-Blodgett-Technik als monomolekulare, orientierte Schicht aufgebracht werden (siehe z.B. K. Hiltrop, H. Stegemeyer, Ber. Bunsenges. Phys. Chem. 82, 883 (1978)). Eine weitere Methode zum Aufbau einer quasi monomolekularen Orientierungsschicht ist die Silanierung des FLC-Displays, d.h. des Glases und der darauf angebrachten Elektrode. Diese, auf verschiedenen Gebieten schon lange benutzte Methode ist in der Ausführung wesentlich einfacher als die Langmuir-Technik und besteht darin, daß Alkylsiloxane, z.B. $R\text{-}SiX_3$ oder $R_2SiX_2$, X = O-Alkyl, Halogen, mit der Glasoberfläche unter Abspaltung von HX und Ausbildung einer Si-O-Si Bindung in Reaktion treten und fest gebunden werden. Das Verfahren ist z.B. beschrieben von K. Ogawa, M. Mino, K. Makajima, Y. Azuma, T. Okumura in Langmuir 1991, 1473-1477 und EP-A-0 386 782. Allerdings sind die mit dieser Methode erzielten Werte für den Kontrast und die Helligkeit nicht für alle Anwendungen ausreichend.

Als besonders günstig für Kontrast und Bistabilität der Schaltzustände hat sich die Modifikation polymerer Orientierungsschichten mit Stoffen erwiesen, die cyclische Strukturelemente enthalten, beispielsweise mit Kronenethern, Azakronen und Carbocyclen (siehe z.B. WO-A 92/13290).

Solche Verbindungen, die chemisch auf der Polymeroberfläche fixiert werden, bestehen in der Regel aus einem cyclischen Strukturelement, einer Spacer- und einer reaktiven Gruppe, die das Anbinden an die Oberfläche ermöglicht. Die reaktiven Gruppen sind z.B. Halogene oder Hydroxygruppen. In der EP-A-0 453 966 sind auch zwei Verbindungen mit siliziumhaltigen reaktiven Gruppen beschrieben. Nach dem Stand der Technik werden die cyclische Strukturelemente enthaltenden Verbindungen in einem separaten Arbeitsschritt auf eine vorher aufgebrachte Orientierungsschicht aus organischen Polymeren aufgetragen und anschließend durch Erhitzen fixiert.

Dieses zweimalige Auftragen bedeutet einen größeren Arbeitsaufwand, was insbesondere für die industrielle Massenfertigung von Nachteil ist. Zudem erhöht der Mehrfachauftrag die Dicke der Orientierungsschicht. Dickere Schichten können jedoch unter Umständen zu dielektrischen Verlusten in der Orientierungsschicht und somit verstärkt zum Auftreten sogenannter Geisterbilder führen.

Aufgabe war es daher, Orientierungsschichten zu entwickeln, die bei möglichst geringer Schichtdicke sehr gute Kontrast- und Helligkeitswerte ermöglichen.

Es wurde nun gefunden, daß bestimmte siliziumhaltige Verbindungen, die über cyclische Strukturelemente verfügen, sich hervorragend als Orientierungsfilme für Flüssigkristalle, insbesondere ferroelektrische, eignen.

Gegenstand der Erfindung ist ein siliziumhaltiges Kupplungsreagenz der Formel (I),

$$C_y - S_p - R_G \qquad (I)$$

worin

$C_y$ einen medio- oder makrocyclischen Kohlenstoffring mit 8 oder mehr Ringgliedern, wobei dieser Ring auch anellierte Benzolringe und -O-, -N-, -S-, -Si- und -B- als Heteroatome enthalten kann;

$S_p$ eine Alkylgruppe mit 1 bis 20 Kohlenstoffatomen, bei der eine oder mehrere nicht benachbarte $CH_2$-Gruppen durch -O-, -S-,-CO-, -O-CO-, -NH-CO-, -O-COO-, -NH-CO-NH-, -NH-CO-O-, $SO_2$-, $-Si(CH_3)_2-$, -CH=CH- oder -C≡C- ersetzt sein können;

$R_G$ -Si $X^1X^2X^3$, wobei

$X^1$ $C_1$-$C_{10}$-Alkoxy, F, Cl, Br

$X^2$, $X^3$ unabhängig voneinander $C_1$-$C_{10}$-Alkyl, $C_1$-$C_{10}$-Alkoxy, Cl, Br

bedeuten, wobei die Verbindungen

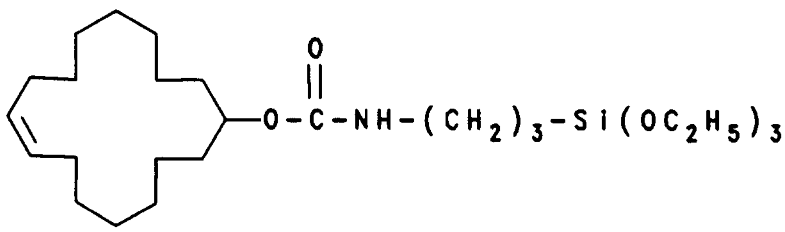

und

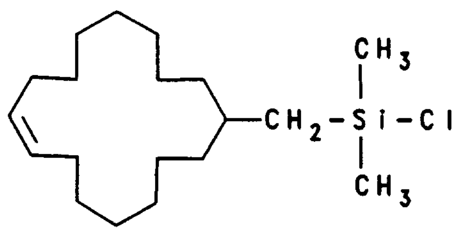

ausgenommen sind.

Weiterhin Gegenstand der Erfindung ist ein Orientierungsfilm für Flüssigkristalle, bestehend aus einer oder mehreren Verbindungen der Formel II,

$C_y$ - $S_p$ - $A_n$ (II)

worin $C_y$ und $S_p$ die in der Formel I angegebenen Bedeutungen haben und

$A_n$ Si $X^1X^2X^3$, wobei

$X^1$ eine Einfachbindung und

$X^2$, $X^3$ unabhängig voneinander eine Einfachbindung, eine Alkyl oder eine Alkoxygruppe

ist, wobei die Verbindung(en) der Formel (II) über die Einfachbindung(en) der Gruppe $A_n$ an eine oxidische Unterlage gebunden sind.

Die aus den erfindungsgemäßen siliziumhaltigen Kupplungsreagenzien hergestellten erfindungsgemäßen Filme eignen sich in hervorragender Weise zur Orientierung von Flüssigkristallen, insbesondere ferroelektrischen. Durch die geringe Dicke des Orientierungsfilms werden dielektrische Spannungsverluste im Display vermieden. Das Auftreten von Geisterbildern wird unterdrückt.

Von den Verbindungen der Formel I sind solche bevorzugt, in denen

$C_y$ ein carbocyclischer Ring mit 12 bis 30, insbesondere 15 bis 27, Ringgliedern ist, wobei einer bis vier Benzolringe anelliert und ein oder mehrere Sauerstoff und/oder Stickstoffatome enthalten sein können.

Insbesondere sind als Carbocyclen geeignet Ringe mit 15, 16, 17 oder 24 Ringgliedern, z.B. Muscon-Derivate, Cyclohexandecanon-Derivate, Zibeton-Derivate oder Derivate des Cyclotetracosadien- und triens, erhältlich durch Metathesereaktion z.B. aus Cyclooctadien, Cyclododecadien oder durch Ringerweiterungsreaktion von Cyclohexadecenon. An Heterocyclen sind vor allem Derivate der Kronether, sowie derivatisierte Aza- und Diaza-Kronether mit Vorteil verwendbar, so z.B. funktionalisierte Alkyloxy-15-Krone-5, Alkyloxy-18-Krone-6, 1-Aza-15-Krone-5, 1-Aza-18-Krone-6, 1,10-Diaza-18-Krone-6.

Beispiele für bevorzugte Ringstrukturen sind:

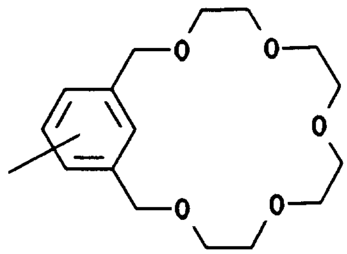 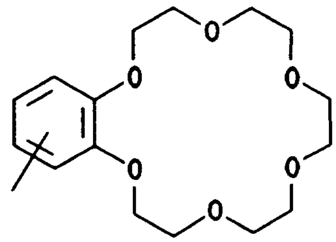

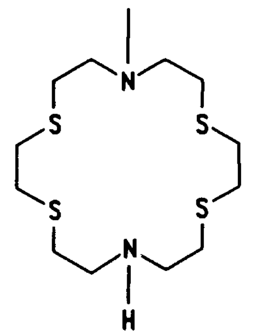

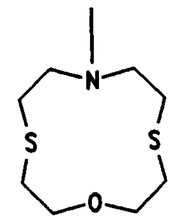

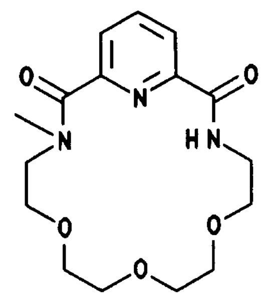

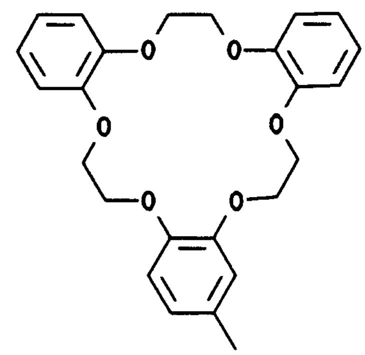

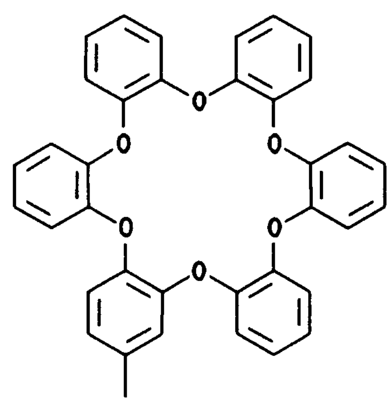

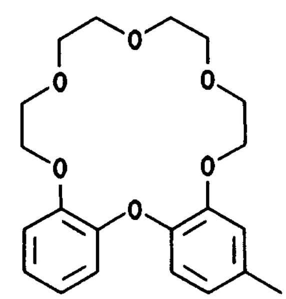

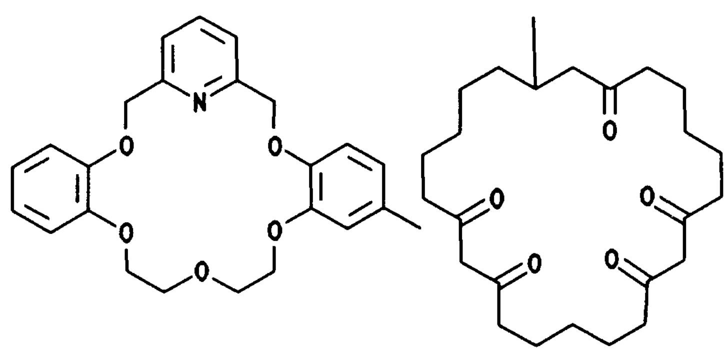

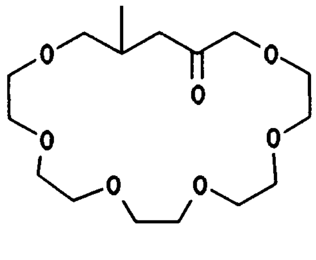

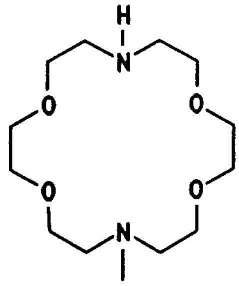

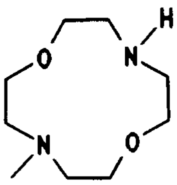

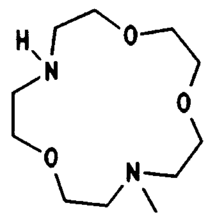

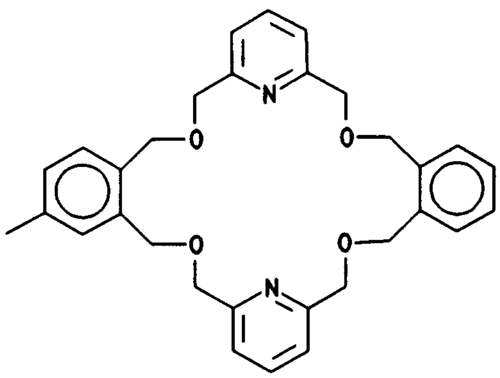

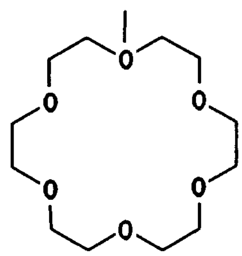

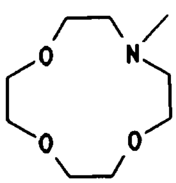

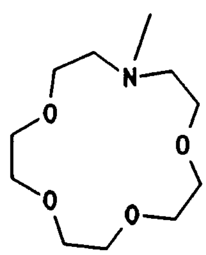

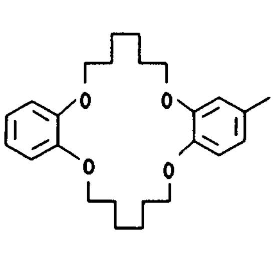
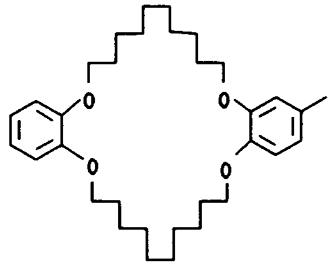
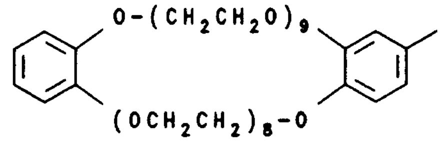

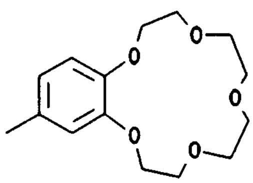
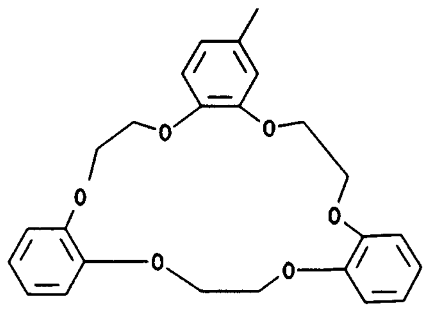
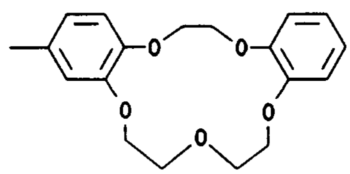

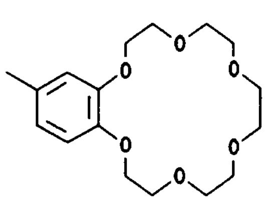

22

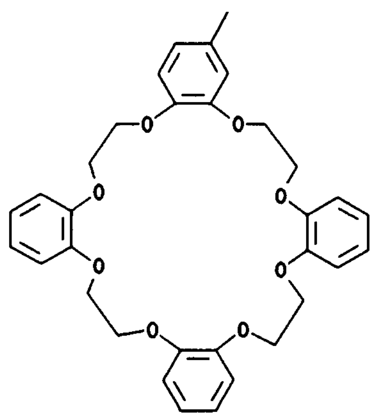
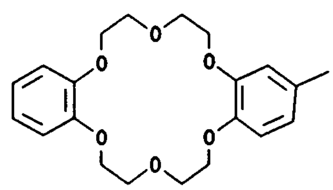

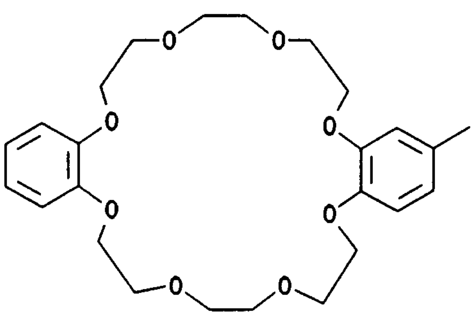
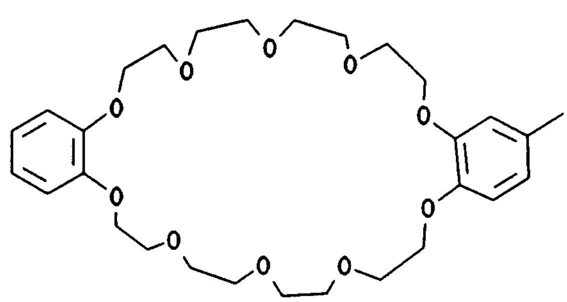

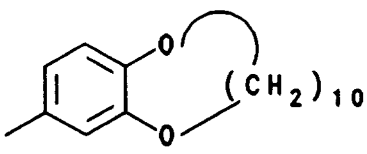 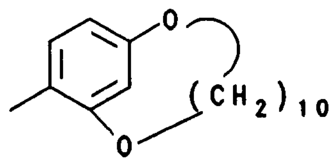

Die Spacergruppe, Sp, ist vorzugsweise eine Alkylengruppe mit 1 bis 16 C-Atomen, wobei eine bis drei, vorzugsweise eine oder zwei, nicht benachbarte $CH_2$-Gruppen durch -O-,-CO-, -O-CO-, -NH-CO-, -O-CO-O-, -CH = CH-, -NH-CO-O- und -NH-CO-NH- ersetzt sein können.

Insbesondere sind Spacer mit 3 bis 12 Kettengliedern bevorzugt, wobei ein oder zwei $CH_2$-Gruppen durch -O-, -CO-, -NH-CO-, -NH-CO-NH- und -NH-CO-O- ersetzt sein können.

Geeignet als Spacer sind z.B. derivatisierte 1,2-, 1,3-, 1,4-, 1,6-, 1,8-Alkandiole, wie Glykol-, Propandiol-, Butandiol- und 2-Butandiol-Derivate, 1,6-Hexandiol, 1,8-Octandiol, ferner 6-Hydroxycapronsäure-Derivate, 6-Aminocapronsäure-Derivate, 1,9-Nonandicarbonsäure oder als Basis für Spacer, Allylessigsäure. Auch Di- oder Triethylenglykole eignen sich als Spacer.

Als reaktive siliziumhaltige Gruppe $R_G$ sind bevorzugt
$-Si(CH_3)_2Cl$; $-Si(OAlkyl)_3$, insbesondere $-Si(OC_2H_5)_3$ und $-Si(OCH_3)_3$,
$-Si(CH_3)(OAlkyl)_2$, insbesondere $-Si(CH_3)(OC_2H_5)_2$ und $-Si(CH_3)(OCH_3)_2$ und
$-Si(CH_3)_2-OAlkyl$, insbesondere $-Si(CH_3)_2(OC_2H_5)$ und $-Si(CH_3)_2(OCH_3)$.

Die Synthese der erfindungsgemäßen Verbindungen erfolgt nach bekannten, dem Fachmann geläufigen Methoden. Beispielsweise können Makrocyclen synthetisiert werden, an die durch geeignete Verknüpfungsreaktionen Spacer- und Silylgruppe angehängt werden.

Die Synthese von Makrocyclen, die zu den entsprechenden erfindungsgemäßen Kupplungsreagenzien umgesetzt werden können, ist beispielsweise beschrieben in WO-A 90/02018, EP-A-0 451 822 und EP-A-0 453 966 bzw. der dort aufgeführten Literatur.

Viele solcher Verbindungen, z.B. Azakronenether, wie 1-Aza-12-krone-4, 1-Aza-15-krone-5 und 1-Aza-18-krone-6, sind kommerziell erhältlich, beispielsweise von der Firme Fluka, Buchs.

Die Verknüpfung des Makrocyclus mit dem Spacer erfolgt ebenfalls nach bekannten, geläufigen Methoden. Beispielsweise lassen sich Azakronenether mit Säurechloriden zu den entspechenden Amiden umsetzen oder reagieren mit Isocyanat zu entsprechenden Harnstoffderivaten. OH-Gruppen tragende Makrocyclen reagieren mit Isocyanaten zu den entsprechenden Urethanen oder können mit geeigneten Reagenzien zu Ethern umgesetzt werden.

Ketogruppen enthaltende Makrocyclen können beispielsweise über eine Wittig-Reaktion und anschließende Hydrierung mit der Spacergruppe eine C-C-Einfachbindung bilden.

Die reaktive siliziumhaltige Gruppe kann beispielsweise durch Hydrosilylierung einer in der Spacergruppe vorhandenen Doppelbindung eingeführt werden.

Reaktive Organosilyl-Verbindungen, die sich an das Spacerfragment knüpfen lassen, können nach an sich bekannten Methoden hergestellt werden (z.B. C. Eaborn et al. in Organometallic Compounds of the Group IV Elements, Vol. 1, Part 1, Dekker New York - 1968; E. Lukevics et al. in J. Organomet. Chem. Libr. 5, 1 (1977) oder R. Heumer et al. in Houben-Weyl Methoden der org. Chemie, E 18/2, S. 685 ff, Thieme-Verlag Stuttgart-New York, 1986).

Die Verknüpfung erfolgt dann beispielsweise durch die Hydrosilylierung einer in der Spacergruppe vorhandenen Doppelbindung.

So können ungesättigte Verbindungen mit Dialkylchlorsilanen $HSiX^2X^3Cl$ in Gegenwart eines Edelmetallkatalysators (z.B. $H_2PtCl_6$ in Isopropanol) und gegebenenfalls in Anwesenheit eines inerten organischen Lösungsmittels bei Temperaturen zwischen 0° und 150°C umgesetzt werden, wobei das Silan vorteilhaft im Überschuß eingesetzt wird.

Eine andere Möglichkeit zur Anknüpfung der Siliziumfunktionalität an die Spacergruppe besteht darin, siliziumhaltige Cyane, wie die kommerziell erhältlichen 3-Cyanpropyl-dimethylchlorsilan, 3-Cyanpropyltriethoxysilan und 3-Cyanpropyl-trichlorsilan, mit Spacerfragmenten, die eine NH- oder OH-Funktion tragen, zur Reaktion zu bringen. Dabei entstehen Spacergruppen mit Urethan- oder Harnstoffstrukturen.

Die erfindungsgemäßen Verbindungen werden zur Herstellung des erfindungsgemäßen Orientierungsfilmes an oxidische Unterlagen gekuppelt. Zum Beispiel können sie direkt auf das Glassubstrat bzw. die Elektrode aufgebracht werden. Die Elektrode besteht vorzugsweise aus Indium-Zinn-Oxid (ITO). Es ist aber ebenso möglich, den erfindungsgemäßen Orientierungsfilm auf einer über der Elektrode liegenden Isolationsschicht, beispielsweise aus $SiO_2$ oder $Ta_2O_5$, aufzubringen.

Die Aufbringung der erfindungsgemäßen Verbindung erfolgt z.B. durch Tauchen oder Aufschleudern (Spincoating), wobei die erfindungsgemäße Verbindung der Formel I in einem geeigneten, vorzugsweise polar aprotischen, Lösungsmittel, wie 1-Methoxy-2-propanol oder Dioxan, gelöst wird. Der Gehalt der Lösung an der erfindungsgemäßen Verbindung beträgt 0,001 bis 0,1 Gew.-%, vorzugsweise 0,005 bis 0,05 Gew.-%, bezogen auf die gesamte Lösung.

Die Fixierung erfolgt in der Regel thermisch durch Erhitzen auf 80 bis 150 °C vorzugsweise 100 bis 145 °C über 10 - 30 min.

Es ist auch eine Fixierung durch Mikrowellen oder Ultraschall möglich.

Danach werden in üblicher Weise die Substrate gerieben und anschließend zum Display zusammengebaut.

Gegenstand der Erfindung ist auch ein Verfahren zur Herstellung eines Orientierungsfilms für Flüssigkristalle, bei dem eine Verbindung der Formel I, in einem polar aprotischen Lösungsmittel gelöst, durch Aufschleudern auf eine oxidische Unterlage aufgebracht wird, worauf eine thermische Fixierung bei 80 bis 150 °C und eine Nachbehandlung durch Reiben erfolgt.

Es können beim Aufbau des Orientierungsfilms auch Gemische verschiedener Ringgrößen oder analoge Verbindungen mit verschiedenen langen Spacern zur Anwendung kommen. Vorzugsweise enthalten diese Gemische 1 bis 5 Verbindungen der Formel (I). Weiterhin können auch Di-Aza-Kronen mit doppelter Spacer-Siloxan-Funktion verwendet werden.

Ein ähnlicher Effekt wie mit den oben beschriebenen Verbindungen der Formel I läßt sich auch mit kettenförmigen Molekülen erzielen, die an beiden Enden reaktive, siliziumhaltige Gruppen enthalten. Nach Fixierung auf einer oxidischen Unterlage bilden diese Verbindungen zusammen mit der Unterlage einen Ring (loop).

Beispiele für solche kettenförmigen Moleküle sind Umsetzungprodukte von Polyethern mit 2 endständigen Aminogruppen (z.B. Jeffamine®-400, Handelsprodukt der Firma Texaco) mit 2 Mol Isocyanato-Siloxanen, beispielsweise

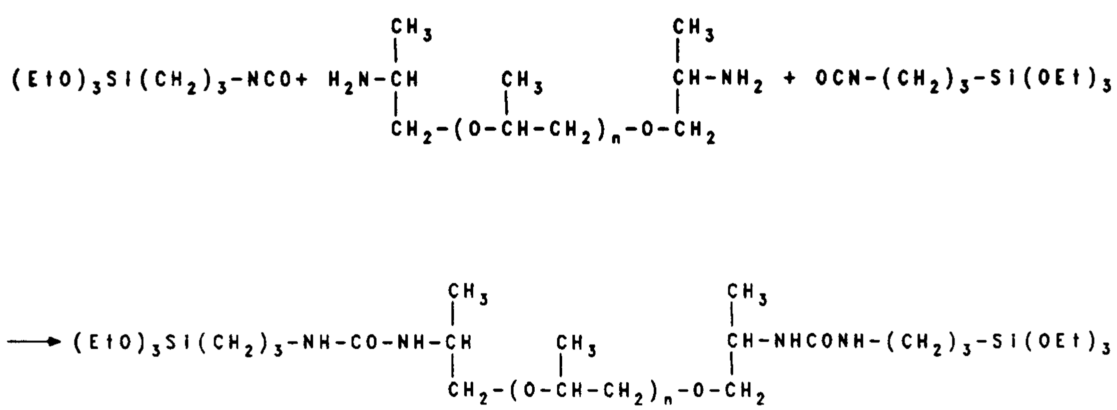

n = 1 bis 10.

Bei Applikation auf beispielsweise einer Glasoberfläche schließen die beiden Ankergruppen, $SiOEt_3$, zusammen mit dieser Oberfläche einen Ring.

Die Erfindung wird durch die Beispiele näher erläutert.

Beispiel 1

11-(Triethoxysilyl)undecylcarbonsäure-(aza-18-krone-6)-amid

Zu 4 ml 10-Undecenylcarbonsäurechlorid in 70 ml Dichlormethan wird eine Lösung von 9 g 1-Aza-18-krone-6 und 8 ml Triethylamin in 30 ml Dichlormethan zugetropft. Die Mischung wird anfangs durch Eiswasser gekühlt, dann 6 Stunden bei Raumtemperatur gerührt. Der Niederschlag von Triethylammoniumhydrochlorid wird über eine Fritte abgesaugt und das Filtrat eingeengt.

Der Rückstand, 14,7 g, wird durch Säulenchromatographie an Kieselgel mit Dichlormethan:Methanol = 19:1 als Laufmittel gereinigt. Man erhält 8,5 g 10-Undecenylcarbonsäure-(aza-18-krone-6)-amid, nach GC 98 % rein.

Hiervon werden 3,12 g in einem trockenen Kolben unter Argon-Schutzgas in 40 ml sauerstoffreiem Toluol gelöst und mit 1,5 ml Triethoxy-H-Silan und 0,1 ml Tetramethyl-divinylsiloxan-Platin als Katalysator versetzt und 72 Stunden unter Ar zum Rückfluß erhitzt. Dann wird die dunkle Lösung von Lösemittel befreit und über Kieselgel mit Dichlormethan-Isopropanol = 19:1 als Laufmittel chromatografiert. Es werden 1,4 g 11-Triethoxysilylundecylcarbonsäure-(aza-18-krone-6)-amid erhalten, nach GC 94,7 % rein.
IR(KCl)C = O bis 1700 $cm^{-1}$, NH (breit) bis 3300 $cm^{-1}$

| | | | |
|---|---|---|---|
| NMR: | Quadr.<br>Triplet<br>Multiplett<br>Triplett<br>Multiplett | 3,78 ppm, Fl. 6<br>1,15 ppm, Fl. 9<br>3,70 ppm, Fl. 24<br>2,25 ppm, Fl. 2<br>1,30 ppm, Fl. 16 | -$OC_2H_5$<br>Aza-krone |

Beispiel 2

(Triethoxysilylpropyl)-aza-18-krone-6-harnstoff

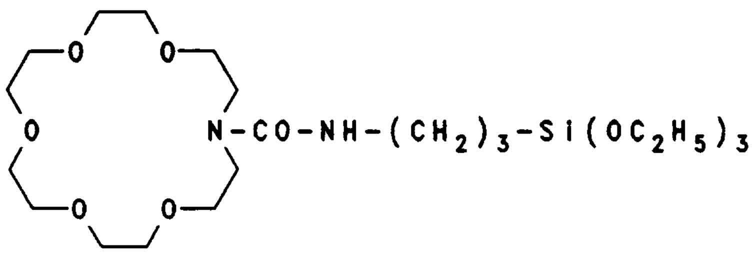

1 g 1-Aza-18-krone-6, in 10 ml Dioxan gelöst, wird mit 1 ml Isocyanatopropyltriethoxysilan versetzt und 3 Stunden auf 100° erwärmt.

Im IR ist nach 3 Stunden die Isocyanat-Bande bei 1250 $cm^{-1}$ verschwunden, eine Harnstoff-C = O-Bande tritt auf bei 1670 $cm^{-1}$. Nach Abdestillieren des Lösemittels wird durch Chromatographie an $SiO_2$ mit $CH_2Cl_2$:Ethanol = 9:1 als Laufmittel gereinigt. Man erhält 1,1 g Substanz mit 94 % Reinheit (nach GC).

Das NMR Spektrum zeigt:

| | | |
|---|---|---|
| Triplett | 6,0 ppm, Fl. 1, | NH |
| Quadr. | 3,8 ppm, Fl. 6 | -O-$CH_2$-$CH_3$ |
| Triplett | 1,15 ppm, Fl. 9 | -O-$CH_2$-$CH_3$ |
| Multiplett | 3,7 ppm, Fl. 24 | Aza-krone |
| Quadr. | 3,05 ppm, Fl. 2 | N-$CH_2$- |
| Multiplett | 1,5 ppm, Fl. 2 | Propyl-Rest. |
| Multiplett | 0,6 ppm, Fl. 2 | Si-$CH_2$ |

Ausgehend von 1-Aza-15-krone-5 wird nach dem gleichen Verfahren die entsprechende Verbindung mit Aza-15-krone-5 hergestellt.

Beispiel 3

N,N'-Bis(1,10-diaza-18-krone-6)-triethoxysilylpropyl-harnstoff

0,5 g 1,10-Diaza-18-krone-6 wird in 10 ml THF gelöst, mit 1,0 ml Isocyanatopropyltrimethoxysilan versetzt und 8 Stunden zum Rückfluß erhitzt. Dann wird das THF abdestilliert und der Rückstand mit $CH_2Cl_2$/Ethanol = 9:1 über $SiO_2$ chromatographiert. Man erhält eine Fraktion von 0,8 g einer Flüssigkeit, die zu 90 % (nach GC). aus dem gewünschten Di-Addukt und zu 10 % aus dem Monoaddukt besteht. Durch nochmalige Chromatographie kann das gewünschte Di-Addukt in einer Reinheit von > 95 %

gewonnen werden.

| | | | |
|---|---|---|---|
| NMR: | Triplett | 5,9 ppm, Fl. 1 | NH |
| | Quardr. | 3,8 ppm, Fl. 6 | $-OC_2H_5$ |
| | Triplett | 1,2 ppm, Fl. 9 | $-OC_2H_5$ |
| | Multiplett | 3,7 ppm, Fl. 12 | Aza-krone |
| | Quardr. | 3,05 ppm, Fl. 2 | Propyl-Rest |
| | Multiplett | 1,5 ppm, Fl. 2 | Propyl-Rest |
| | Multiplett | 0,6 ppm, Fl. 2 | Propyl-Rest |

Beispiel 4

8-Cyclohexadecenyl 3-triethoxysilylpropylcarbamat

0,9 g 8-Cyclohexadecen-1-ol, hergestellt durch Reduktion von 8-Cyclohexadecen-1-on mit $NaBH_4$ in Ethanol, werden mit 1 ml 3-Isocyanatopropyl-triethoxysilan und 50 mg Triethylamin versetzt und 24 h bei 80 °C gehalten. Bei 90 °C/0.1 mbar werden Leichtsieder entfernt. Der Rückstand erstarrt beim Erkalten wachsartig und weist im IR-Spektrum nur noch Spuren einer Isocyanat-Bande, dafür aber eine starke Bande (1700 $cm^{-1}$) der

H
|
-OCN-Gruppe, auf. $^1$H-NMR: $\delta$ = 3.1 (q, 2H, $-NHCH_2$); 4.8 (m, 1H, -CHOC-);
‖ ‖
O O

5.2 (m, 2H, -CH=CH-); 0.6 (m, $-CH_2Si$).

Nach GLC hat die Verbindung einen (extrapolierten) Kp. von 427 °C.

Beispiel 5

Chlordimethylsilyl-methyl-cyclohexadec-8-en

Bei Raumtemperatur werden 10,7 g Triphenylmethylphosphoniumbromid zu einer Mischung von 20 ml n-Butyllithium (1,55 molar in Hexan) und 60 ml Diethylether gegeben. Nach 4 h bei Raumtemperatur werden 7,3 g 8-Cyclohexadecen-1-on zugetropft und 18 h zum Rückfluß erhitzt. Nach Filtration wird das Lösungsmittel abdestilliert und der Rückstand chromatographisch gereinigt ($SiO_2$, Hexan/Ethylacetat 95:5); es resultieren 2,5 g 1-Methylen-8-cyclohexadecen, ausgewiesen durch ein $^1$H-NMR-Spektrum: $\delta$ = 5,2 (t, -CH=CH-); $\delta$ = 4,75 (s, $C=CH_2$).

2,5 g obiger Verbindung werden mit 2.0 ml Dimethylchlorsilan und 0,5 ml Platindivinyl-tetramethyldisiloxan-Komplex (10 % in Xylol) in einem Druckgefäß 24 h auf 60 °C erwärmt. Nach Destillation resultieren 3,1 g Produkt mit Kp. 105-110 °C/0,01 mbar; $^1$H-NMR: $\delta$ = 5,2 (m, 2H, -CH=CH-); 0,85 (m, 2H, $-CH_2Si$); 0,3 (s, 6H, $-CH_3$).

ANWENDUNGSBEISPIELE

Bau von Testzellen:

Zum Nachweis der vorteilhaften Eigenschaften der erfindungsgemäßen Orientierungsfilme werden Testzellen hergestellt, die mit einer ferroelektrischen Flüssigkristallmischung gefüllt und anschließend geprüft werden.

Dazu werden Glasplatten, die mit Indium-Zinnoxid (ITO) beschichtet und strukturiert sind, zunächst in einer wäßrigen Tensidlösung und anschließend zweimal in Wasser, das über eine Filteranlage der Firma Millipore gereinigt wurde, bei 60 °C im Ultraschallbad gereinigt. Nachdem die Glassubstrate mit Heißluft getrocknet worden sind, werden sie mit den entsprechenden erfindungsgemäßen Verbindungen, gelöst in 1-Methoxy-2-propanol (0,01 gew.-%ig), beschichtet. Die Beschichtung wird mit einem Spincoater durchgeführt, kann aber auch mit anderen, z.B. Druck, Spritz- oder Tauch-Verfahren erfolgen. Die Lösungen werden auf das Glassubstrat aufgetropft, mit 500 rpm 5 s vorgeschleudert und mit 4000 rpm 30 s hauptgeschleudert. Der Naßfilm wird 30 min bei 150 °C getrocknet. Anschließend wird mit Isopropylalkohol im Ultraschallbad 5 min gespült, mit einem samtartigen Stoff gerieben und die Substrate zu den erfindungsgemäßen Zellen zusammengeklebt.

Als Orientierungsfilme werden folgende Silane verwendet und auf die zuvor beschriebene Weise appliziert:

OF 1

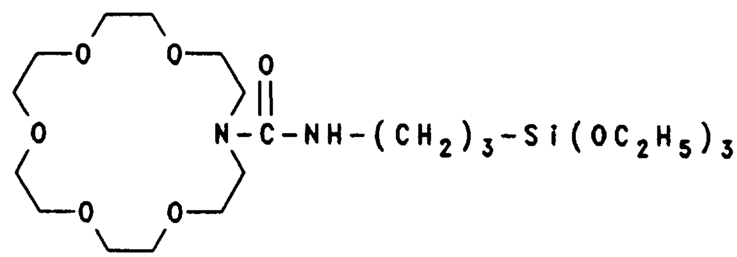

OF 2

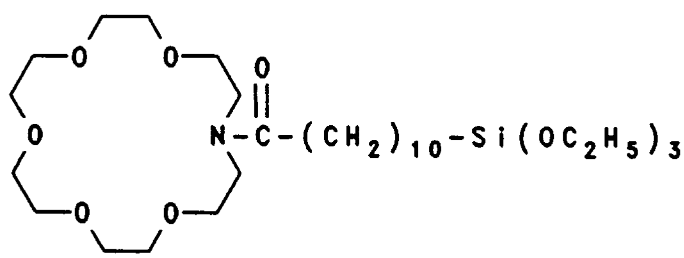

OF 3

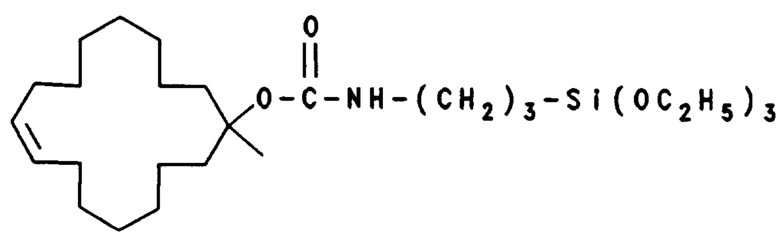

Beispiele: Meßbeispiele (Charakterisierung der erfindungsgemäßen Orientierungsfilme)

Zur Charakterisierung der erfindungsgemäßen Orientierungsfilme werden ferroelektrische Flüssigkristallmischungen verwendet. Beurteilt werden die Orientierung des Flüssigkristalls in der Testzelle, die den erfindungsgemäßen Orientierungsfilm enthält; das Schaltverhalten des Flüssigkristalls bei Anlegen von kurzen Ansteuerimpulsen, die den Betrieb eines Matrix-Displays simulieren, und der optische Kontrast, der das Verhältnis der Transmissionen des hellen und dunklen Schaltzustands darstellt.

Die erfindungsgemäßen Orientierungsfilme werden sowohl in der eingangs beschriebenen "Chevron"-Textur, als auch in der sogenannten "Bookshelf" oder " "Quasi-bookshelf"-Textur verwendet. Die "Bookshelf"-Textur wird ausgehend von der "Chevron"-Textur durch Anlegen einer Rechteckspannung von ca. 10 Hz bei einer Amplitude von ca. 10-15 V/µm induziert. Die Zellen befinden sich im Strahlengang eines Polarisationsmikroskops, an dem zusätzlich eine Photodiode angebracht ist. Die Photodiode ist mit einem Speicheroszilloskop verbunden und ermöglicht die Erfassung der optischen Transmission der Flüssigkristallzelle.

Ein freiprogrammierbarer Funktionsgenerator mit nachfolgendem Spannungsverstärker liefert die für das Schalten notwendigen Schaltimpulse an die Testzelle. Über eine Computerschnittstelle können dem Funktionsgenerator verschiedene Impulsformen vorgegeben werden.
Eine der verwendeten Impulsformen simuliert an den eingesetzten 1-Pixel-Testzellen den Betrieb in einem Matrixdisplay. Dabei ist das Verhältnis von Zeilen- zu Spalten-Spannung (Datenimpulse) eine wichtige Größe, die als Bias-Verhältnis definiert ist. Dieses Verhältnis sollte möglichst groß sein, da nur bei geringer Datenpulsamplitude ein entsprechend hoher Kontrast möglich wird.

Als weitere wichtige Größe wird der effektive Tiltwinkel zur Charakterisierung der Orientierungsfilme herangezogen. Für die "Bookshelf"-Geometrie der smektischen Lagen ist der doppelte Tiltwinkel identisch mit dem Schaltwinkel. Der effektive Tiltwinkel in der "Chevron"-Textur ist kleiner als der Molekültiltwinkel (Neigung der Moleküle bezüglich der Schichtnormalen), als Folge der gewinkelten Lagenstruktur.

Sogenannte "Twist"- oder "Bend"-Zuständen führen zu einer weiteren Reduktion des effektiven Tiltwinkels. Die dabei zu beobachtende bläuliche Farbe des dunklen Schaltzustands und die geringe Transmission des Hellzustands resultiert in einem äußerst geringen Kontrast.

Der effektive Tiltwinkel in der "Bookshelf"-Textur ist deutlich größer, weshalb sich der Hellzustand durch eine größere Helligkeit auszeichnet. Jedoch kann auch hier das Auftreten von "Twist"-Zuständen zu erheblichen Kontrasteinbußen führen. Die erfindungsgemäßen Orientierungsfilme können die Bildung von "Twist"-Zuständen weitgehend unterdrücken.

Die eingesetzte FLC-Mischung M1 besitzt folgende Zusammensetzung (in Mol %):

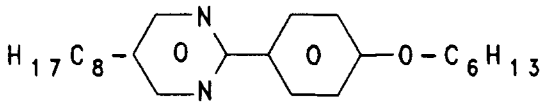

14,58

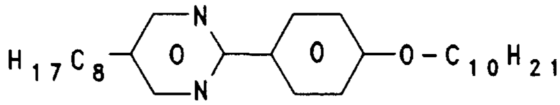

9,72

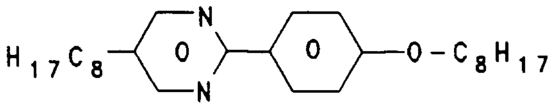

13,08

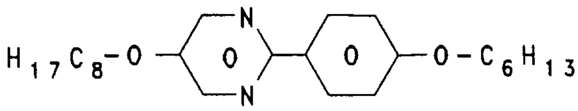

9,11

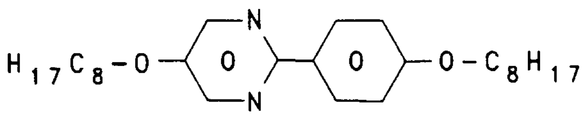

4,21

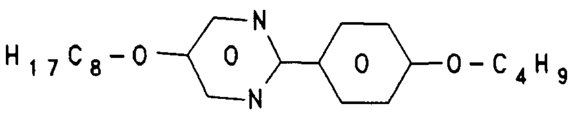

9,62

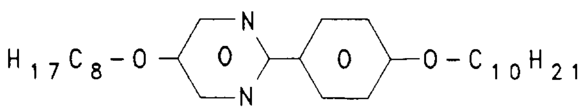

7,65

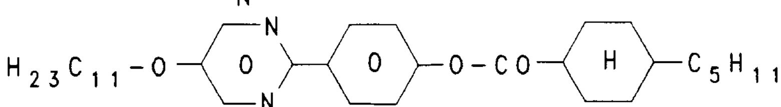

14,42

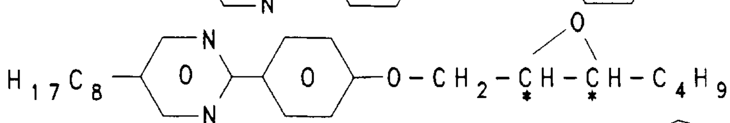

10,50

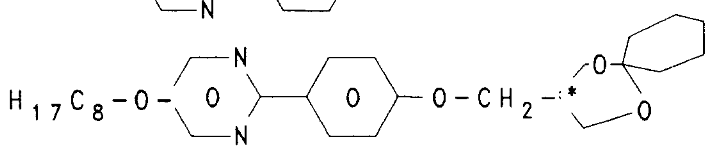

1,99

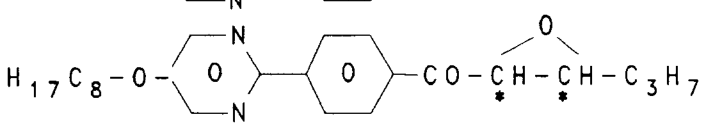

5,12

und die Phasenfolge $S_C^*$ 65 $S_A$ 73 N* 86 I mit einer spontanen Polarisation von 38 nC• $cm^{-2}$ bei einer Temperatur von 25 °C.

Der effektive Tiltwinkel des Flüssigkristalls wird in der "Chevron"-Textur beurteilt, die unmittelbar nach dem Füllen der Zellen entsteht. Die Multiplex und Schalteigenschaften werden hingegen in der "Bookshelf"- bzw. "Quasi-bookshelf"-Textur gemessen, die aus der "Chevron"-Textur durch Anlegen einer Rechteckspannung erhalten wird (10-15 V/µm bei 10 Hz, 30 s).

Es werden Testzellen, die die erfindungsgemäßen Orientierungsfilme enthalten, mit der ferroelektrischen Flüssigkristall-Mischung M1 gefüllt. Als Referenzbeispiel dient eine Zelle mit geriebener ITO-Elektrode als Orientierungsschicht. Die Ergebnisse sind in Tabelle 1 zusammengestellt.

Tabelle 1

| Charakterisierung der erfindungsgemäßen Orientierungsfilme (OF) | | | | |
|---|---|---|---|---|
| | OF1 (S. 17) | OF2 (S. 18) | OF3 (S. 18) | Referenz (geriebene ITO-Elektrode) |
| effektiverTiltwinkel | 10° | 10° | 10° | 8° |
| Twist-Zustände | nein | nein | nein | ja/teilweise |
| maximaler Bias unter Multiplexbedingungen | ~ 5 | ~ 4 | ~ 5 | Multiplexen nicht möglich |

**Patentansprüche**

1. Siliziumhaltiges Kupplungsreagenz der Formel (I),

$C_y — S_p — R_G$ (I)

worin

$C_y$ einen medio- oder makrocyclischen Kohlenstoffring mit 8 oder mehr Ringgliedern, wobei dieser Ring auch anellierte Benzolringe und -O-, -N-, -S-, -Si- und -B- als Heteroatome enthalten kann;

$S_p$ eine Alkylgruppe mit 1 bis 20 Kohlenstoffatomen, bei der eine oder mehrere nicht benachbarte $CH_2$-Gruppen durch -O-,-S-,-CO-, -O-CO-, -NH-CO-, -O-COO-, -NH-CO-NH-, -NH-CO-O-, $-SO_2-$, $-Si(CH_3)_2-$, -CH = CH- oder -C≡C- ersetzt sein können;

$R_G$ -Si $X^1X^2X^3$, wobei

$X^1$ $C_1$-$C_{10}$-Alkoxy, F, Cl, Br

$X^2$, $X^3$ unabhängig voneinander $C_1$-$C_{10}$-Alkyl, $C_1$-$C_{10}$-Alkoxy, Cl, Br

bedeuten, wobei die Verbindungen

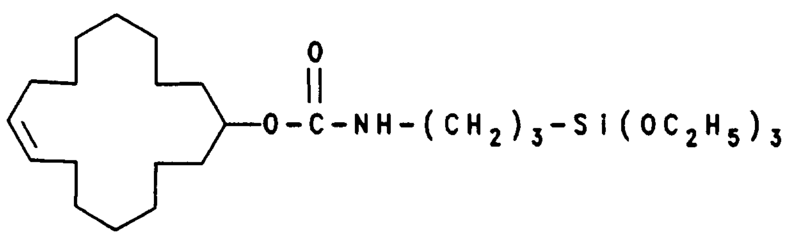

und

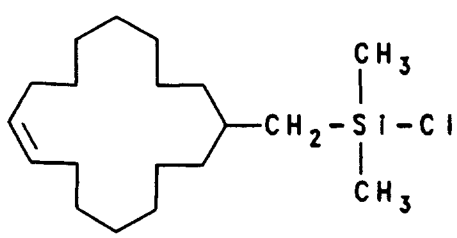

ausgenommen sind.

2. Siliziumhaltiges Kupplungsreagenz nach Anspruch 1, dadurch gekennzeichnet, daß der Rest

$C_y$ ein carbocyclischer Ring mit 12 bis 30, insbesondere 15 bis 27, Ringgliedern ist, wobei auch ein bis vier Benzolringe anelliert sein können und ein oder mehrere Sauerstoff und/oder Stickstoffatome enthalten sein können.

3. Siliziumhaltiges Kupplungsreagenz nach Anspruch 1 oder 2, dadurch gekennzeichnet, daß der Rest $C_y$ in der Formel I für:

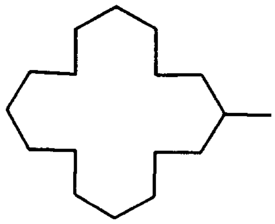 , 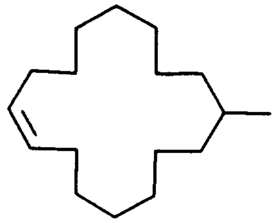 , 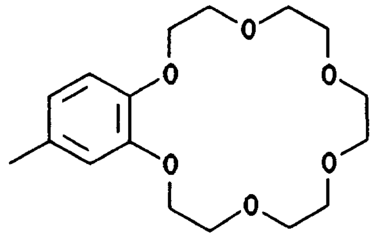 ,

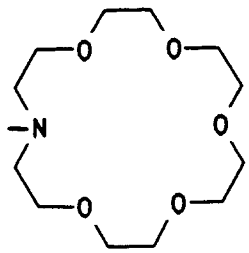 , 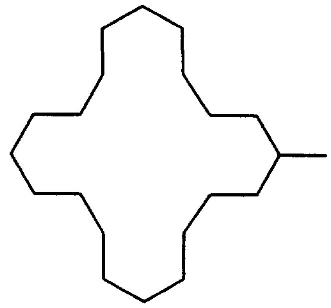

steht.

**4.** Verwendung eines siliziumhaltigen Kupplungsreagenzes der Formel I nach Anspruch 1 zur Herstellung von Orientierungsfilmen für Flüssigkristalle.

**5.** Orientierungsfilm für Flüssigkristalle, bestehend aus einer oder mehreren Verbindungen der Formel II,

$C_y$ - $S_p$ - $A_n$    (II)

worin $C_y$ und $S_p$ die in der Formel I angegebenen Bedeutungen haben und

$A_n$  Si $X^1X^2X^3$, wobei

$X^1$  eine Einfachbindung und

$X^2$, $X^3$  unabhängig voneinander eine Einfachbindung, eine $C_1$-$C_{10}$-Alkyl oder eine $C_1$-$C_{10}$-Alkoxygruppe

ist, wobei die Verbindung(en) der Formel (II) über die Einfachbindung(en) der Gruppe $A_n$ an eine oxidische Schicht gebunden sind.

**6.** Orientierungsfilm für Flüssigkristalle nach Anspruch 5, dadurch gekennzeichnet, daß der Rest

$C_y$  ein carbocyclischer Ring mit 12 bis 30, insbesondere 15 bis 27, Ringgliedern ist, wobei auch 1 bis 4 Benzolringe anelliert und ein oder mehrere Sauerstoff und/oder Stickstoffatome enthalten sein können.

**7.** Orientierungsfilm für Flüssigkristalle nach Anspruch 5 oder 6, dadurch gekennzeichnet, daß der Rest $C_y$ für

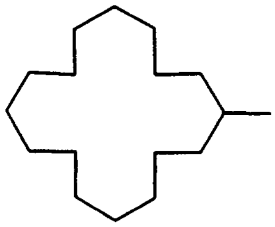, 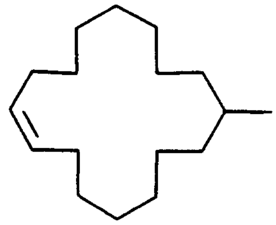, 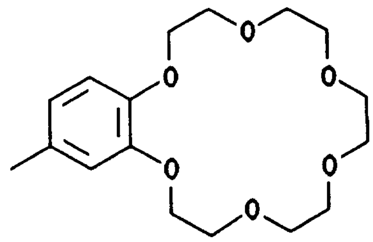,

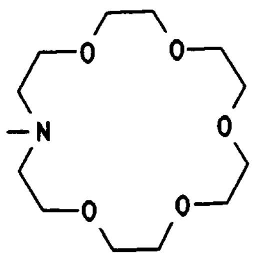, 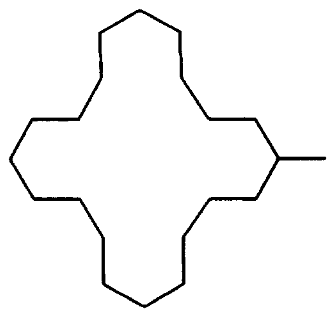

steht.

**8.** Orientierungsfilm für Flüssigkristalle nach einem oder mehreren der Ansprüche 5 bis 7, dadurch gekennzeichnet, daß der Flüssigkristall ferroelektrisch ist.

**9.** Orientierungsfilm für Flüssigristalle nach einem oder mehreren der Ansprüche 5 bis 8, dadurch gekennzeichnet, daß er direkt auf dem Substrat bzw. der Elektrode aufgebracht ist.

**10.** Orientierungsfilm für Flüssigkristalle nach einem oder mehreren der Ansprüche 5 bis 8, dadurch gekennzeichnet, daß er auf einer Isolierschicht aufgebracht ist.

**11.** Orientierungsfilm für Flüssigkristalle, gekennzeichnet durch kettenförmige Moleküle, die über zwei reaktive, siliziumhaltige Gruppen an eine oxidische Unterlage gebunden sind und die zusammen mit dieser Unterlage einen Ring (Loop) bilden.

**12.** Verfahren zur Herstellung eines Orientierungsfilms für Flüssigkristalle, dadurch gekennzeichnet, daß eine Verbindung der Formel I in Anspruch 1, in einem polar aprotischen Lösungsmittel gelöst, durch Aufschleudern auf eine oxidische Unterlage aufgebracht wird, worauf eine thermische Fixierung bei 80 bis 150 °C und eine Nachbehandlung durch Reiben erfolgt.

**13.** Elektrooptische Schalt- und Anzeigevorrichtung, enthaltend eine Orientierungsfilm nach einem oder mehreren der Ansprüche 5 bis 13.

Europäisches Patentamt

# EUROPÄISCHER RECHERCHENBERICHT

Nummer der Anmeldung
EP 94 10 2630

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | CHEMICAL ABSTRACTS, vol. 112, no. 9, 26. Februar 1990, Columbus, Ohio, US; abstract no. 77312s, CHEN, Y. ET AL. 'ORGANOSILICON COMPOUNDS CONTAINING CROWN ETHER MOIETY. II. HYDROSILYLATION AND IMMOBILIZATION OF ALKENYL AZA CROWN ETHERS AND PROPERTIES OF SILICONE-SUPPORTED AZA CROWN ETHERS' Seite 815 ; * Zusammenfassung * & GAODENG XUEXIAO HUAXUE XUEBAO, Bd.10, Nr.3, 1989 Seiten 249 - 253 --- | 1-3 | C07F7/12<br>C07F7/18<br>G02F1/133 |
| X | CHEMICAL ABSTRACTS, vol. 100, no. 16, 16. April 1984, Columbus, Ohio, US; abstract no. 121709e, CHEN, Y. ET AL. 'CROWN ETHER-CONTAINING ORGANOSILICON COMPOUNDS. (1). HYDROSILYLATION OF ALLYLBENZO CROWN ETHERS AND SOME REACTIONS OF THEIR ADDUCTS' Seite 6 ; * Zusammenfassung * & GAODENG XUEXIAO HUAXUE XUEBAO, Bd.4, Nr.6, 1983 Seiten 739 - 744 --- | 1,2 | RECHERCHIERTE SACHGEBIETE (Int.Cl.5)<br>C07F<br>G02F |
| X | THE JOURNAL OF ORGANIC CHEMISTRY, Bd.53, 1988 Seiten 3190 - 3195 BRADSHAW, J.S. ET AL. 'SYNTHESIS OF (ALLYLOXY)METHYL-SUBSTITUTED DIAZA-18-CROWN-6 COMPOUNDS FOR ATTACHMENT TO SILICON GEL' * das ganze Dokument * --- | 1-3 | |
| A | EP-A-0 528 415 (HOECHST AG) * das ganze Dokument * --- | 1,4 | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 24. Mai 1994 | Rinkel, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

# EUROPÄISCHER RECHERCHENBERICHT

Nummer der Anmeldung
EP 94 10 2630

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DE-A-41 27 287 (HOECHST AG)<br>* das ganze Dokument *<br>----- | 1,4 | |
| | | | RECHERCHIERTE SACHGEBIETE (Int.Cl.5) |

Der vorliegende Recherchenbericht wurde für alle Patentansprüche erstellt

| Recherchenort | Abschlußdatum der Recherche | Prüfer |
|---|---|---|
| DEN HAAG | 24. Mai 1994 | Rinkel, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..............................................
& : Mitglied der gleichen Patentfamilie, übereinstimmendes Dokument